# EUROPEAN PATENT APPLICATION

(11) **EP 3 525 153 A1**
(43) Date of publication of application: **14.08.2019**
(21) Application number: 18201480.3
(22) Date of filing: 19.10.2018
(51) Int. Cl.: G06Q 30/02

(54) **SYSTEMS AND METHODS FOR EVENT-BASED MAKEUP CONSULTATION SESSIONS**

(30) Priority: 13.02.2018 US 201862629971 P; 11.06.2018 US 201816004726
(71) Applicant: Perfect Corp., 231 New Taipei City (TW)
(72) Inventor: KURNIAWAN, Kristian, 231 New Taipei City (TW); HUANG, Chao-Yung, 116 Taipei City (TW)
(74) Representative: Stöckeler, Ferdinand

(57) **Abstract**

A makeup consultation device obtains a makeup consultation request from a client device. The makeup consultation device obtains and processes user contextual data and determines a grouping of beauty advisors currently logged into an account hosted by a makeup applicator service. The makeup consultation device accesses profile information associated with each of the grouping of beauty advisors and matches the user with at least one of the beauty advisors based on the processed user contextual data and the profile information of each of the grouping of beauty advisors. The makeup consultation device displays the at least one matching beauty advisor in a user interface and obtains a selection of one of the at least one matching beauty advisors. The makeup consultation device establishes a consultation session between the client device and an advisor device of the selected one of the at least one matching beauty advisor.

## Description

### CROSS-REFERENCE TO RELATED APPLICATION

This application claims priority to, and the benefit of, U.S. Provisional Patent Application entitled, "Request form before call BA," having Serial No. 62/629,971, filed on February 13, 2018, which is incorporated by reference in its entirety.

### TECHNICAL FIELD

The present disclosure generally relates to media editing and more particularly, to systems and methods for event-based makeup consultation sessions.

### BACKGROUND

Individuals invest a substantial amount of money in makeup tools and accessories. However, it can be challenging to achieve the same results as a makeup professional even with the aid of conventional self-help guides.

### SUMMARY

In accordance with one embodiment, a makeup consultation device obtains a makeup consultation request from a client device. The makeup consultation device obtains and processes user contextual data and determines a grouping of beauty advisors currently logged into an account hosted by a makeup applicator service. The makeup consultation device accesses profile information associated with each of the grouping of beauty advisors and matches the user with at least one of the beauty advisors based on the processed user contextual data and the profile information of each of the grouping of beauty advisors. The makeup consultation device displays the at least one matching beauty advisor in a user interface and obtains a selection of one of the at least one matching beauty advisors. The makeup consultation device establishes a consultation session between the client device and an advisor device of the selected one of the at least one matching beauty advisor.

Another embodiment is a system that comprises a memory storing instructions and a processor coupled to the memory. The processor is configured by the instructions to obtain a makeup consultation request from a client device. The processor is further configured to obtain and process user contextual data and determine a grouping of beauty advisors currently logged into an account hosted by a makeup applicator service. The processor is further configured to access profile information associated with each of the grouping of beauty advisors and match the user with at least one of the beauty advisors based on the processed user contextual data and the profile information of each of the grouping of beauty advisors. The processor is further configured to display the at least one matching beauty advisor in a user interface and obtain a selection of one of the at least one matching beauty advisors. The processor is further configured to establish a consultation session between the client device and an advisor device of the selected one of the at least one matching beauty advisor.

Another embodiment is a non-transitory computer-readable storage medium storing instructions to be implemented by a computing device having a processor, wherein the instructions, when executed by the processor, cause the computing device to obtain a makeup consultation request from a client device. The processor is further configured to obtain and process user contextual data and determine a grouping of beauty advisors currently logged into an account hosted by a makeup applicator service. The processor is further configured to access profile information associated with each of the grouping of beauty advisors and match the user with at least one of the beauty advisors based on the processed user contextual data and the profile information of each of the grouping of beauty advisors. The processor is further configured to display the at least one matching beauty advisor in a user interface and obtain a selection of one of the at least one matching beauty advisors. The processor is further configured to establish a consultation session between the client device and an advisor device of the selected one of the at least one matching beauty advisor.

Other systems, methods, features, and advantages of the present disclosure will be or become apparent to one with skill in the art upon examination of the following drawings and detailed description. It is intended that all such additional systems, methods, features, and advantages be included within this description, be within the scope of the present disclosure, and be protected by the accompanying claims.

### BRIEF DESCRIPTION OF THE DRAWINGS

Various aspects of the disclosure can be better understood with reference to the following drawings. The components in the drawings are not necessarily to scale, with emphasis instead being placed upon clearly illustrating the principles of the present disclosure. Moreover, in the drawings, like reference numerals designate corresponding parts throughout the several views.
FIG. 1 is a block diagram of a system for implementing a makeup consultation platform in accordance with various embodiments of the present disclosure.
FIG. 2 is a schematic diagram of the makeup consultation device of FIG. 1 in accordance with various embodiments of the present disclosure.
FIG. 3 is a top-level flowchart illustrating examples of functionality implemented as portions of the makeup consultation device of FIG. 1 according to various embodiments of the present disclosure.
FIG. 4 illustrates an example user interface displayed on the client device in FIG. 1 for obtaining user contextual data according to various embodiments of the present disclosure.
FIG. 5 illustrates matching of a beauty advisor with a user performed by the makeup consultation device in FIG. 1 according to various embodiments of the present disclosure.
FIG. 6 illustrates product information associated with one or more cosmetic products recommended by the beauty advisor being displayed in a user interface on a client device 122 according to various embodiments of the present disclosure.

### DETAILED DESCRIPTION

Various embodiments are disclosed for facilitating the application of makeup by implementing an improved platform for event-based makeup consultation sessions between an advisor device utilized by a beauty advisor and a client device utilized by a user seeking the consultation. As described in more detail below, the system includes a makeup consultation device that receives a makeup consultation request initiated by a user at a client device. Based on event information provided by the user, the makeup consultation device identifies one or more suitable beauty advisors and establishes a consultation session between the client device of the user and the advisor device utilized by the beauty advisor. The beauty advisor then communicates directly with the user and provides a consultation tailored to the event that the user will be attending.

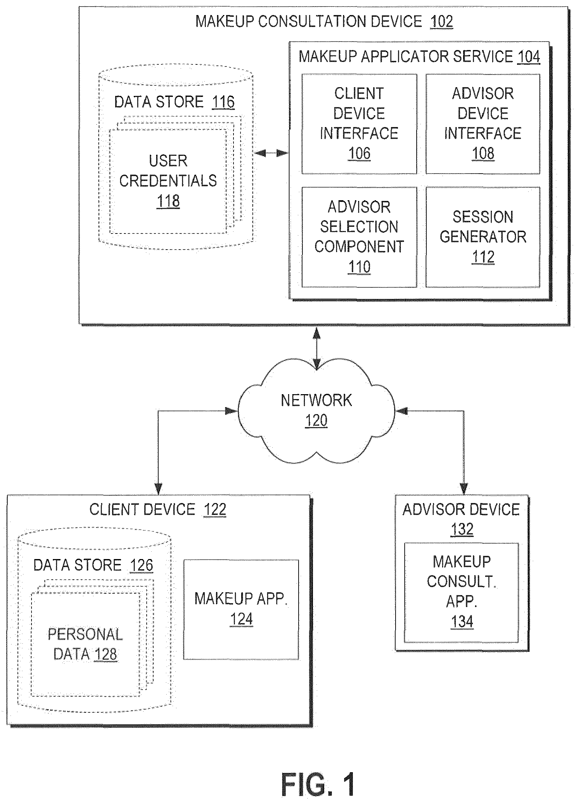

A description of a system for implementing an event-based makeup consultation platform is now described followed by a discussion of the operation of the components within the system. FIG. 1 is a block diagram of a networked environment that includes a makeup consultation device 102 in which the techniques for event-based makeup consultation disclosed herein may be implemented. The makeup consultation device 102 may be embodied as a server computer, a cloud-based computing device, or any other system providing computing capability. Alternatively, the makeup consultation device 102 may employ a plurality of computing devices that can be arranged, for example, in one or more server banks, computer banks or other arrangements. Such computing devices can be located in a single installation or can be distributed among different geographical locations. The networked environment also includes a client device 122and an advisor device 132 where each device may be embodied as, but not limited to, a smartphone, a tablet computing device, a laptop computer, and so on. The client device 122 may be further equipped with digital content recording capabilities (*e*.*g*., front-facing camera).

The makeup consultation device 102, the client device 122, and the advisor device 132 are communicatively coupled to each other via a network 120 such as, for example, the Internet, intranets, extranets, wide area networks (WANs), local area networks (LANs), wired networks, wireless networks, or other suitable networks, *etc.,* or any combination of two or more such networks. The client device 122 is communicatively coupled to the makeup consultation device 102 for requesting event-based makeup consultations, where the client devices 122 uploads digital images of the user to the makeup consultation device 102.

As one of ordinary skill will appreciate, the digital images may be encoded in any of a number of formats including, but not limited to, JPEG (Joint Photographic Experts Group) files, TIFF (Tagged Image File Format) files, PNG (Portable Network Graphics) files, GIF (Graphics Interchange Format) files, BMP (bitmap) files or any number of other digital formats. Alternatively, the digital images may be derived from a still image of a video encoded in formats including, but not limited to, Motion Picture Experts Group (MPEG)-1, MPEG-2, MPEG-4, H.264, Third Generation Partnership Project (3GPP), 3GPP-2, Standard-Definition Video (SD-Video), High-Definition Video (HD-Video), Digital Versatile Disc (DVD) multimedia, Video Compact Disc (VCD) multimedia, High-Definition Digital Versatile Disc (HD-DVD) multimedia, Digital Television Video / High-definition Digital Television (DTV/HDTV) multimedia, Audio Video Interleave (AVI), Digital Video (DV), QuickTime (QT) file, Windows Media Video (WMV), Advanced System Format (ASF), Real Media (RM), Flash Media (FLV), an MPEG Audio Layer III (MP3), an MPEG Audio Layer II (MP2), Waveform Audio Format (WAV), Windows Media Audio (WMA), or any number of other digital formats.

A makeup applicator service 104 executes on a processor of the makeup consultation device 102 and includes a client device interface 106, an advisor device interface 108, an advisor selection component 110, and a session generator 112. The client device interface 106 is configured to obtain a makeup consultation request from client device. The client device interface 106 is further configured to obtain and process user contextual data. In the context of the present disclosure, user contextual data refers to data relating to preferences or events associated with a particular user. The user contextual data may comprise, for example, historical data associated with the user relating to cosmetic products previously applied by the user in addition to historical data associated with the user relating to beauty advisors previously utilized by the user. The user contextual data may further comprise information relating to an event that the user will be attending as well as profile data relating to the user.

The makeup consultation device 102 includes a data store 116 for storing user credentials 118 associated with users of client devices 122 and beauty advisors utilizing advisor devices 132. The advisor device interface 108 is configured to determine a grouping of beauty advisors that are currently logged into an online forum being hosted by the makeup applicator service 104. The advisor device interface 108 is further configured to access profile information associated with each of the beauty advisors based on the user credentials 118.

The advisor selection component 110 is configured to match the user with one or more of the beauty advisors that are currently logged on. For some embodiments, the matching operation is performed based on the processed user contextual data and the profile information for each of the beauty advisors that are currently logged on. The session generator 112 is configured to cause the one or more matching beauty advisors to be displayed in a user interface on a client device 122 and obtain a selection from the user of one of these beauty advisors. The session generator 112 then establishes a consultation session between the client device 122 and an advisor device 132 of the selected one or more beauty advisors.

The client device 122 includes a makeup application 124 executed on a processor of the client device 122 and transmits makeup consultation requests to the client device interface 106. The makeup application 124 is further configured to allow a user to participate in makeup consultation sessions with a beauty advisor on an advisor device 132. For some embodiments, the client device 122 includes a data store 126 that stores personal data 128 such as calendar data for events, profile data relating to the user, cosmetic makeup preferences of the user, and so on.

In some embodiments, the user of the client device 122 may grant access and allow the advisor selection component 110 executing in the makeup consultation device 102 to match the user with one or more of the beauty advisors based at least in part on the personal data 128. The advisor device 132 includes a makeup consultation application 134 that executes on a processor of the advisor device 132. The makeup consultation application 134 is configured to allow a beauty advisor to participate in makeup consultation sessions with a user on a client device 122.

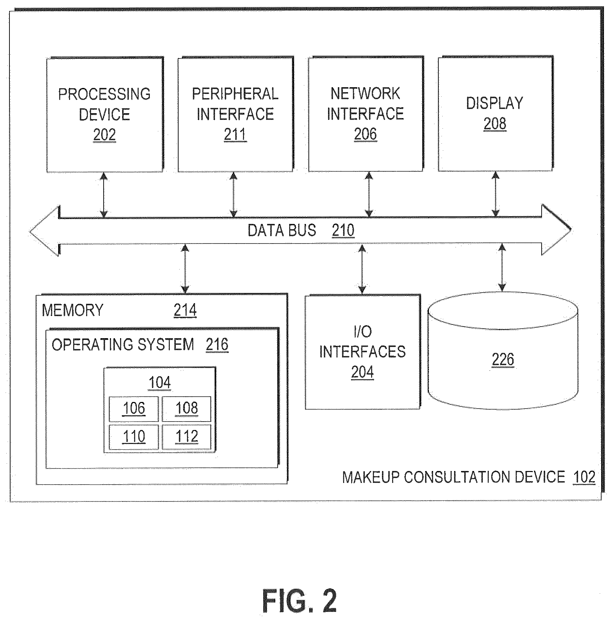

FIG. 2 illustrates a schematic block diagram of the makeup consultation device 102 in FIG. 1. As discussed above, the makeup consultation device 102 may be embodied as a server computer, a cloud-based computing device, or any other system providing computing capability. As shown in FIG. 2, the makeup consultation device 102 comprises memory 214, a processing device 202, a number of input/output interfaces 204, a network interface 206, a display 208, a peripheral interface 211, and mass storage 226, wherein each of these components are connected across a local data bus 210.

The processing device 202 may include any custom made or commercially available processor, a central processing unit (CPU) or an auxiliary processor among several processors associated with the makeup consultation device 102, a semiconductor based microprocessor (in the form of a microchip), a macroprocessor, one or more application specific integrated circuits (ASICs), a plurality of suitably configured digital logic gates, and other well known electrical configurations comprising discrete elements both individually and in various combinations to coordinate the overall operation of the computing system.

The memory 214 may include any one of a combination of volatile memory elements (*e*.*g*., random-access memory (RAM, such as DRAM, and SRAM, *etc*.)) and nonvolatile memory elements (*e.g.,* ROM, hard drive, tape, CDROM, *etc*.). The memory 214 typically comprises a native operating system 216, one or more native applications, emulation systems, or emulated applications for any of a variety of operating systems and/or emulated hardware platforms, emulated operating systems, *etc.* For example, the applications may include application specific software which may comprise some or all the components of the makeup consultation device 102 depicted in FIG. 1. In accordance with such embodiments, the components are stored in memory 214 and executed by the processing device 202, thereby causing the processing device 202 to perform the operations/functions for implementing the features disclosed herein. One of ordinary skill in the art will appreciate that the memory 214 can, and typically will, comprise other components which have been omitted for purposes of brevity. For some embodiments, the components in the makeup consultation device 102 may be implemented by hardware and/or software.

Input/output interfaces 204 provide any number of interfaces for the input and output of data. For example, where the makeup consultation device 102 comprises a personal computer, these components may interface with one or more user input/output interfaces 204, which may comprise a keyboard or a mouse, as shown in FIG. 2. The display 208 may comprise a computer monitor, a plasma screen for a PC, a liquid crystal display (LCD) on a hand held device, a touchscreen, or other display device.

In the context of this disclosure, a non-transitory computer-readable medium stores programs for use by or in connection with an instruction execution system, apparatus, or device. More specific examples of a computer-readable medium may include by way of example and without limitation: a portable computer diskette, a random access memory (RAM), a read-only memory (ROM), an erasable programmable read-only memory (EPROM, EEPROM, or Flash memory), and a portable compact disc read-only memory (CDROM) (optical).

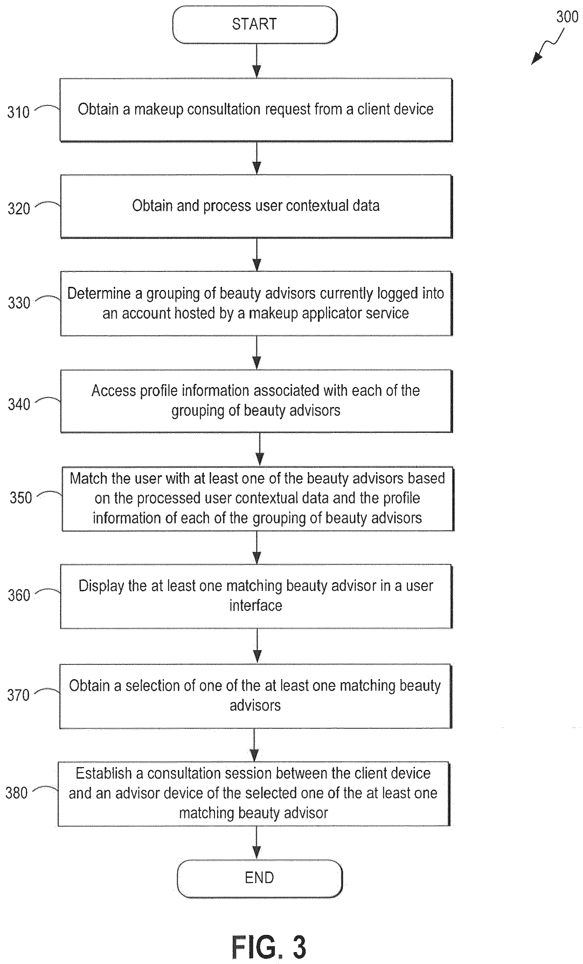

Reference is made to FIG. 3, which is a flowchart 300 in accordance with various embodiments for implementing an event-based makeup consultation platform using the makeup consultation device 102 in the networked environment of FIG. 1. It is understood that the flowchart 300 of FIG. 3 provides merely an example of the different types of functional arrangements that may be employed to implement the operation of the various components of the makeup consultation device 102. As an alternative, the flowchart 300 of FIG. 3 may be viewed as depicting an example of steps of a method implemented in the makeup consultation device 102 according to one or more embodiments.

Although the flowchart 300 of FIG. 3 shows a specific order of execution, it is understood that the order of execution may differ from that which is depicted. For example, the order of execution of two or more blocks may be scrambled relative to the order shown. Also, two or more blocks shown in succession in FIG. 3 may be executed concurrently or with partial concurrence. It is understood that all such variations are within the scope of the present disclosure.

At block 310, the makeup consultation device 102 obtains a makeup consultation request from a client device 122 (FIG. 1). At block 320, the makeup consultation device 102 obtains and processes user contextual data. For some embodiments, the user contextual data comprises historical data associated with the user relating to cosmetic products previously applied by the user and/or historical data associated with the user relating to beauty advisors previously utilized by the user.

The makeup consultation device 102 may obtain and process user contextual data by displaying a plurality of prompts in a user interface on a client device 122 to cause the user to enter user contextual data, where the user contextual data comprises information relating to an event that the user will be attending and/or profile data relating to the user. The information relating to the event can comprise textual information describing the event, a date and time of the event, a location of the event, and so on.

For some embodiments, the makeup consultation device 102 obtains weather information relating to the event based on the information relating to the event. For some embodiments, the makeup consultation device 102 obtains and processes user contextual data by obtaining permission from the user to access social media data (*e.g.,* Facebook and other social media websites) associated with the user and accessing the social media data and obtaining information relating to an event that the user will be attending.

At block 330, the makeup consultation device 102 determines a grouping of beauty advisors currently logged into an account hosted by the makeup applicator service 104 (FIG. 1). At block 340, the makeup consultation device 102 accesses profile information associated with each of the grouping of beauty advisors.

At block 350, the makeup consultation device 102 matches the user with at least one of the beauty advisors based on the processed user contextual data and the profile information of each of the grouping of beauty advisors. For some embodiments, the makeup consultation device 102 obtains one or more digital images of a facial region of the user from the client device and then extracts attributes for predetermined facial features, where the matching operation performed between the user and at least one of the beauty advisors is based on the extracted attributes. Such attributes can comprise a skin tone and a skin age exhibited on the facial region of the user.

At block 360, the makeup consultation device 102 displays the at least one matching beauty advisor in a user interface. At block 370, the makeup consultation device 102 obtains a selection of one of the at least one matching beauty advisors. At block 380, the makeup consultation device 102 establishes a consultation session between the client device and an advisor device of the selected one of the at least one matching beauty advisor.

For some embodiments, product information relating to one or more cosmetic products selected by the user during the consultation session are displayed to the user, where such product information can comprise, but is not limited to, product images, textual information relating to products, product purchasing information, and a Uniform Resource Locator (URL) of an online retailer for a product web page selling a cosmetic product. For some embodiments, the makeup consultation device 102 establishes a consultation session between the user and the selected beauty advisor by transmitting the one or more digital image of the facial region of the user and the user contextual data to the selected beauty advisor. Thereafter, the process in FIG. 3 ends.

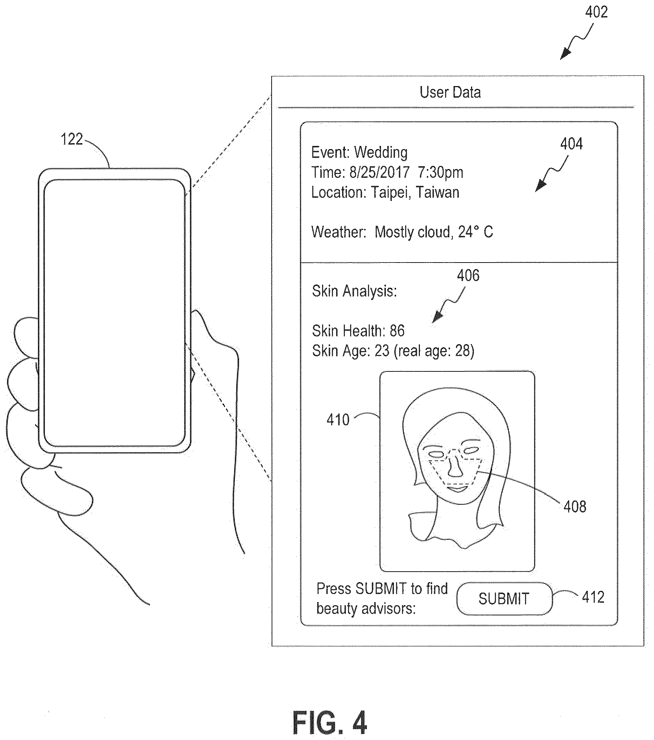

Having described the basic framework of a system for providing makeup consultation, reference is made to the following figures, which further illustrate various features disclosed above. FIG. 4 illustrates an example user interface 402 displayed on the client device 122. For some embodiments, the makeup applicator service 104 executing on the makeup consultation device 102 may cause a user interface 402 to be displayed on the client device 122 for purposes of obtaining user contextual data. As discussed above, user contextual data may refer to data relating to preferences or events associated with a particular user. The user contextual data may comprise, for example, historical data associated with the user relating to cosmetic products previously applied by the user. The user contextual data may also comprise historical data associated with the user relating to beauty advisors previously utilized by the user. The user contextual data may further comprise information relating to an event that the user will be attending as well as profile data relating to the user. Other user contextual data may comprise attributes of the user such as but not limited to, facial features of the user.

As discussed above, the makeup applicator service 104 utilizes the user contextual data in matching the user with one or more beauty advisors. In FIG. 4, various examples of user contextual data are shown. As shown, the user contextual data includes event information 404, which can include textual information describing the event, a date and time of the event, and a location of the event. For some embodiments, the makeup consultation device 102 may be further configured to retrieve weather information based on the event information 404 provided by the user.

The makeup consultation device 102 may obtain the user contextual data *(e.g.,* event information 404) in a number of ways. For some embodiments, the makeup consultation device 102 prompts the user of a client device 122 (FIG. 1) to fill out an electronic form and manually enter specific information (*e*.*g*., event description, time/date, *etc*.). For some embodiments, the user of the client device 122 can elect to grant access to the user's personal data 128, which may comprise calendar data, social media data, and so on. The makeup consultation device 102 may then extract user contextual data from the user's personal data 128.

For some embodiments, the makeup consultation device 102 may also prompt the user to upload a digital image 410 depicting a facial region of the user. For some embodiments, the makeup consultation device 102 analyzes a target region 408 within the facial region of the user depicted in the digital image 410 and extracts attributes relating to predetermined facial features. Such attributes may comprise, for example, the skin tone and a skin age exhibited on the facial region of the user. Based on such attributes, the makeup consultation device 102. The user interface shown in FIG. 4 may also include a user interface control 412 for submitting the user contextual data.

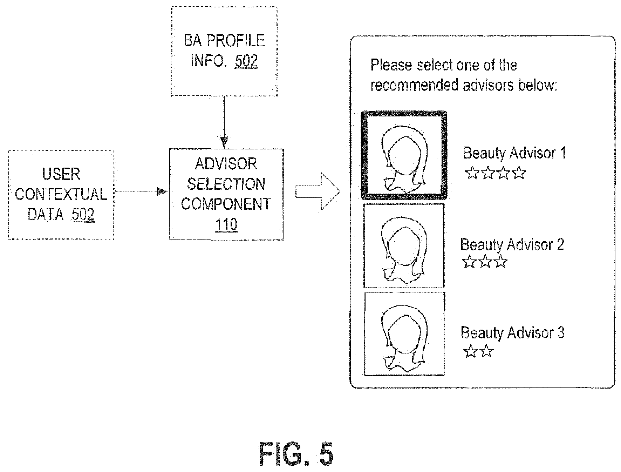

FIG. 5 illustrates matching of a beauty advisor with a user performed by the makeup consultation device 102 in FIG. 1. As shown, the advisor selection component 110 executing in the makeup consultation device 102 (FIG. 1) receives user contextual data 502, which may comprise, for example, historical data associated with the user relating to cosmetic products previously applied by the user. The user contextual data 502 may also comprise historical data associated with the user relating to beauty advisors previously utilized by the user. The user contextual data 502 may further comprise information relating to an event that the user will be attending as well as profile data relating to the user. Other user contextual data may comprise attributes of the user such as but not limited to, facial features of the user. The advisor selection component 110 also receives profile information associated with beauty advisors that are currently online. This may comprise, for example, beauty advisors that are currently logged into an online forum hosted by the makeup consultation device 102. Such profile information may comprise, for example, ratings assigned to each beauty advisor, experience level of each beauty advisor, information relating to events *(e.g.,* weddings) that each beauty advisor specializes in, and so on. Based on these inputs, the advisor selection component 110 matches the user associated with the user contextual data 502 with one or more beauty advisors. For example, one particular beauty advisor may be more experienced at handling wrinkles.

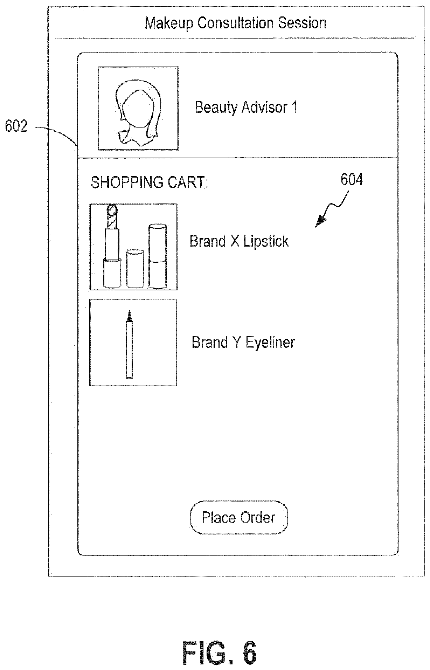

FIG. 6 illustrates product information 604 associated with one or more cosmetic products recommended by the beauty advisor being displayed in a user interface 602 on a client device 122. Such product information 604 may include, but is not limited to, cosmetic product images, textual information relating to cosmetic products, cosmetic product purchasing information, a Uniform Resource Locator (URL) of an online retailer for a product web page selling cosmetic products, and so on.

It should be emphasized that the above-described embodiments of the present disclosure are merely possible examples of implementations set forth for a clear understanding of the principles of the disclosure. Many variations and modifications may be made to the above-described embodiment(s) without departing substantially from the spirit and principles of the disclosure. All such modifications and variations are intended to be included herein within the scope of this disclosure and protected by the following claims.

## Claims

1. A method implemented in a makeup consultation device utilized by a makeup professional, comprising:
obtaining a makeup consultation request from a client device;
obtaining and processing user contextual data;
determining a grouping of beauty advisors currently logged into an account hosted by a makeup applicator service;
accessing profile information associated with each of the grouping of beauty advisors;
matching the user with at least one of the beauty advisors based on the processed user contextual data and the profile information of each of the grouping of beauty advisors;
displaying the at least one matching beauty advisor in a user interface;
obtaining a selection of one of the at least one matching beauty advisors; and
establishing a consultation session between the client device and an advisor device of the selected one of the at least one matching beauty advisor.

2. The method of claim 1, wherein the user contextual data comprises at least one of:
historical data associated with the user relating to cosmetic products previously applied by the user; and
historical data associated with the user relating to beauty advisors previously utilized by the user.

3. The method of claim 1 or 2, wherein obtaining and processing user contextual data comprises displaying a plurality of prompts in a user interface to enter user contextual data, the user contextual data comprising at least one of:
information relating to an event that the user will be attending; and
profile data relating to the user.

4. The method of claim 3, wherein the information relating to the event comprises at least one of: textual information describing the event; a date and time of the event; and a location of the event.

5. The method of claim 4, further comprising obtaining weather information relating to the event based on the information relating to the event.

6. The method of one of claims 1 to 5, wherein obtaining and processing user contextual data comprises:
obtaining permission from the user to access social media data associated with the user; and
accessing the social media data and obtaining: information relating to an event that the user will be attending, and profile data relating to the user.

7. The method of one of claims 1 to 6, further comprising:
obtaining at least one digital image of a facial region of the user from the client device; and
extracting attributes for predetermined facial features, wherein the matching operation performed between the user and at least one of the beauty advisors is based on the extracted attributes,
wherein the attributes comprise face shape and eye size.

8. The method of claim 7, wherein establishing a consultation session between the user and the selected one of the at least one matching beauty advisor comprises transmitting the at least one digital image of the facial region of the user and the user contextual data to the selected one of the at least one matching beauty advisor.

9. The method of one of claims 1 to 8, further comprising:
obtaining at least one digital image of a facial region of the user from the client device; and
extracting attributes for predetermined skin care features, wherein the matching operation performed between the user and at least one of the beauty advisors is performed based on the extracted attributes.

10. The method of claim 9, wherein the attributes comprise: spots, wrinkles, dark circular areas, and an aged skin appearance exhibited by the facial region of the user.

11. The method of one of claims 1 to 10, further comprising:
obtaining at least one digital image of a facial region of the user from the client device; and
determining one or more types of cosmetics currently applied to the facial region of the user, wherein the matching operation performed between the user and at least one of the beauty advisors is performed based on the one or more determined types of cosmetics.

12. The method of one of claims 1 to 11, further comprising displaying product information relating to at least one cosmetic product selected by the user during the consultation session.

13. The method of claim 12, wherein the product information comprises at least one of:
cosmetic product image;
textual information relating to a cosmetic product;
cosmetic product purchasing information; and
a Uniform Resource Locator (URL) of an online retailer for a product web page selling a cosmetic product.

14. A system, comprising:
a memory storing instructions;
a processor coupled to the memory and configured by the instructions to at least perform a method of one of claims 1 to 13.

15. A non-transitory computer-readable storage medium storing instructions to be implemented by a computing device having a processor, wherein the instructions, when executed by the processor, cause the computing device to at least perform a method of one of claims 1 to 13.
